# EUROPÄISCHE PATENTSCHRIFT

(11) **EP 0 406 712 B1**
(45) Veröffentlichungstag und Bekanntmachung des Hinweises auf die Patenterteilung: **10.11.1993**
(21) Anmeldenummer: 90112411.5
(22) Anmeldetag: 29.06.1990
(51) Int. Cl.: F16H 59/70, B60K 28/16, B60R 16/02

(54) **Verfahren und Vorrichtung zur Erfassung des bei einem Fahrzeug eingelegten Getriebeganges**
Method and apparatus to detect the engaged gear in a vehicle
Méthode et dispositif pour détecter la vitesse engagée d'un véhicule

(30) Priorität: 07.07.1989 DE 3922409
(43) Veröffentlichungstag der Anmeldung: 09.01.1991
(73) Patentinhaber: Hella KG Hueck & Co., 59552 Lippstadt (DE)
(72) Erfinder: Höver, Norbert, D-4780 Lippstadt (DE)

(56) Entgegenhaltungen:
- EP-A- 0 291 088
- WO-A-90/00120
- DE-A- 3 138 715
- GB-A- 2 162 323
- US-A- 4 776 421
- US-A- 4 803 898

## Beschreibung

Die Erfindung betrifft ein Verfahren gemäß Anspruch 1 bzw. eine Einrichtung gemäß Anspruch 4 zur Erfassung des bei einem Fahrzeug eingelegten Getriebeganges.

Aus der US-A-4,803,898 ist ein derartiges Verfahren und eine derartige Vorrichtung vorbekannt, bei dem zur Erfassung des bei einem Fahrzeug eingelegten Getriebeganges die Motordrehzahl und die Fahrzeuggeschwindigkeit gemessen werden. Weiterhin wird ein Quotient aus der Motordrehzahl und der Fahrzeuggeschwindigkeit gebildet. Dieser Quotient wird mit vorgegebenen, die möglichen Übersetzungsverhältnisse der Getriebegänge kennzeichnenden Werten verglichen, und es wird der Getriebegang ausgegeben, bei dem der Vergleich die Identität des Quotienten mit dem zugehörigen Wert ergibt. Bei diesem Dokument bleibt jedoch offen, auf welche Weise die Fahrzeuggeschwindigkeit ermittelt wird.

Aus der DE-PS 26 42 738 ist ein Verfahren vorbekannt, das zur Veränderung des Sollwertes einer Laufruheregelung einer Brennkraftmaschine dient.

Dieses bekannte Verfahren hat jedoch Nachteile. Die Messung der Raddrehzahl erfolgt nur an einem angetriebenen Fahrzeugrad. Wenn dieses Fahrzeugrad aufgrund von Antriebsschlupf durchdreht oder aber durch ein Hindernis blockiert, so ist die gemessene Raddrehzahl kein Maß für die Drehzahl der Getriebeabtriebswelle mehr, da üblicherweise bei Kraftfahrzeugen mindestens zwei Räder angetrieben werden und der Antrieb über ein Differentialgetriebe erfolgt. Beim Durchdrehen oder Blockieren des betreffenden Fahrzeugrades würde also ein falsches Übersetzungsverhältnis und damit ein falscher eingelegter Getriebegang erfaßt.

Weiterhin sind in diesem vorbekannten Verfahren keine Maßnahmen vorgesehen, um den eingelegten Getriebegang für Anzeige- oder Regelungs- und Steuerungszwecke auszugeben, sondern es erfolgt allein eine Beeinflussung des Sollwerts der Laufruheregelung.

Aus der DE-OS 24 35 869 ist ein Antriebsschlupfregelsystem bekannt, bei dem der Mittelwert von Raddrehzahlen der nichtangetriebenen Räder gebildet und bei dem ein Steuersignal erzeugt wird, das das Getriebe des Fahrzeuges zu Umschaltungen in einen höheren Gang veranlaßt. Eine Einrichtung oder ein Verfahren zur Erfassung des tatsächlich eingelegten Getriebeganges ist jedoch nicht dort vorgesehen.

Die Erfindung hat die Aufgabe, ein Verfahren und eine Vorrichtung zur Erfassung des bei einem Fahrzeug eingelegten Getriebeganges zu schaffen, das die möglichst genaue und fehlerfreie Erfassung des Getriebeganges ermöglicht und das die Ausgabe der Information über den eingelegten Getriebegang ermöglicht.

Diese Aufgabe wird durch das erfindungsgemäße Verfahren dadurch gelöst, daß die Bewegungsgröße bestimmt wird durch Messen der Raddrehzahlen aller angetriebenen Räder und durch Bildung des Mittelwertes der gemessenen Raddrehzahlen, daß der Quotient aus der Motordrehzahl und dem Mittelwert gebildet wird und daß der niedrigste Getriebegang ausgegeben wird, wenn die gemessene Raddrehzahl aller angetriebenen Räder den Wert 0 aufweist.

Dadurch, daß die Raddrehzahl aller angetriebenen Räder gemessen wird, kann das Blockieren oder Durchdrehen eines Antriebsrades nicht zu einer Falscherfassung des eingelegten Getriebeganges führen. Der Mittelwert der gemessenen Raddrehzahl entspricht aufgrund der konstruktiven Ausgestaltung der üblichen Differentialgetriebe in Kraftfahrzeugen der Drehzahl der Getriebeabtriebswelle, so daß daraus nahezu fehlerfrei in Kenntnis der Motordrehzahl auf das Übersetzungsverhältnis geschlossen werden kann.

Demgemäß kann der Quotient aus der Motordrehzahl und dem Mittelwert gebildet und dieser Quotient mit vorgegebenen, die möglichen Übersetzungsverhältnisse der Getriebegänge kennzeichnenden Werten verglichen werden. Bei üblichen handgeschalteten Getrieben in Kraftfahrzeugen sind dies üblicherweise fünf sogenannte Vorwärtsgänge, die ein festes Übersetzungsverhältnis zwischen der Motordrehzahl und der Drehzahl der Getriebeabtriebswelle bestimmen. Nach dem Vergleich des Mittelwerts mit den vorgegebenen Werten wird dann der Getriebegang ausgegeben, bei dem der Vergleich die Identität des Quotienten mit dem zugehörigen Wert ergeben hat.

Bei dem erfindungsgemäßen Verfahren ist es besonders vorteilhaft, wenn grundsätzlich der niedrigste Getriebegang ausgegeben wird, falls die gemessenen Raddrehzahlen aller angetriebenen Räder den Wert 0 aufweisen. Damit kann z. B. die Ausgabe eines falschen Getriebeganges beim Start des Kraftfahrzeuges aus dem Stillstand heraus vermieden werden.

Weiterhin ist bei dem erfindungsgemäßen Verfahren vorgesehen, daß der erfaßte Getriebegang ausgegeben wird, um einerseits zur Anzeige oder zur Steuerung und Regelung von Betriebsparametern der Brennkraftmaschine oder des Kraftfahrzeuges verwendet zu werden.

Die erfindungsgemäße Einrichtung löst die gestellte Aufgabe dadurch, daß eine Anordnung zur Ermittlung der Bewegungsgröße gebildet wird durch an allen angetriebenen Fahrzeugrädern angeordnete Raddrehzahlfühler und durch einen Mittelwertbildner für die gemessenen Raddrehzahlen, daß der Quotientenbildner zur Bildung des Quotienten aus der Motordrehzahl und dem Mittelwert vorgesehen ist und daß die Ausgabemittel den niedrigsten Getriebegang ausgeben, wenn die gemessene Raddrehzahl aller angetriebenen Räder den Wert 0 aufweist.

Die erfindungsgemäße Einrichtung weist gegenüber dem Vorbekannten die gleichen Vorteile auf wie das erfindungsgemäße Verfahren. Bei der erfindungsgemäßen Einrichtung ist insbesondere ein Speicher vorgesehen, der die möglichen Übersetzungsverhältnisse der Getriebegänge als vorgegebene Werte aufweist.

Vorteilhafte Ausgestaltungen und Weiterbildungen des erfindungsgemäßen Verfahrens und der erfindungsgemäßen Einrichtung gehen aus den von dem Verfahrensanspruch und dem Einrichtungsanspruch abhängigen Unteransprüchen hervor.

Es ist besonders vorteilhaft, wenn die möglichen Übersetzungsverhältnisse in etwa kennzeichnende Wertebereiche gewählt werden und wenn der Getriebegang ausgegeben wird, bei dem der Quotient innerhalb des vorgegebenen Wertebereichs liegt. Mit diesen Maßnahmen ist es möglich, einen z. B. durch eine Kupplung zwischen der Brennkraftmaschine und dem nachgeschalteten Getriebe oder durch einen Drehmomentwandler eines automatischen Getriebes möglicherweise auftretenden Schlupf zwischen der Motorabtriebswelle und der Getriebeabtriebswelle zu berücksichtigen, ohne daß dieser Schlupf zu einer Fehlerfassung des eingelegten Getriebeganges führt. Dieser Schlupf könnte möglicherweise bei dem erfindungsgemäßen Verfahren bzw. bei der erfindungsgemäßen Einrichtung zu einer Fehlerfassung des eingelegten Betriebeganges führen, weil dann der Vergleich des Quotienten mit den vorgegebenen Werten nicht genau die Identität ergibt. Indem man mit den geschilderten Maßnahmen eine gewisse Schwankungsbreite des Vergleichsergebnisses zuläßt, können derartige kupplungsschlupf- bzw. wandlerschlupfbedingte Abweichungen des Quotienten vom zugehörigen Wert kompensiert werden.

In diesem Zusammenhang wird bei der erfindungsgemäßen Einrichtung der Speicher vorteilhaft derart ausgelegt, daß er für jedes mögliche Übersetzungsverhältnis zwei Werte aufweist, von denen ein Wert oberhalb und ein Wert unterhalb des Wertes, der dem exakten Übersetzungsverhältnis entspricht, und wenn Ausgabemittel für den Getriebegang vorgesehen sind, bei dem der Quotient innerhalb der beiden vorgegebenen Werte liegt.

Es ist weiterhin vorteilhaft, wenn der zuletzt erkannte Getriebegang ausgegeben wird, falls der Vergleich des Quotienten mit den vorgegebenen, die möglichen Übersetzungsverhältnisse der Getriebegänge kennzeichnenden Werten keine Identität ergibt. Mit dieser Maßnahme können z. B. auch dann Getriebegänge ausgegeben werden, wenn einer oder mehrere der zur Messung der Raddrehzahlen der angetriebenen Räder vorgesehenen Drehzahlfühler einen Defekt aufweisen.

Bei der erfindungsgemäßen Einrichtung kann der Mittelwertbildner vorteilhaft durch einen Summierer und einen Teiler gebildet werden. Der Summierer summiert dann die gemessene Raddrehzahlen, die nach der Summation durch den Teiler durch die Zahl der angetriebenen Räder geteilt werden.

Es ist besonders vorteilhaft, wenn das erfindungsgemäße Verfahren bzw. die erfindungsgemäße Einrichtung bei einer Antriebsschlupfregelung verwendet werden, wie sie z. B. aus der DE-OS 36 35 095 bekannt ist. Dort erfolgt die Antriebsschlupfregelung durch die Regelung des Motor- und des Bremsmomentes. Um eine derartige Momentenregelung durchführen zu können, ist jedoch die Kenntnis der Trägheitsmomente vor allem des Antriebsstrangs von besonderer Bedeutung. Die Trägheitsmomente des Antriebsstranges sind vom eingelegten Getriebegang abhängig.

Ein Ausführungsbeispiel der erfindungsgemäßen Einrichtung ist in den Zeichnungen dargestellt und wird im folgenden anhand der Zeichnungen näher erläutert.

Es zeigen
Figur 1 eine erfindungsgemäße Einrichtung als Teil einer Antriebsschlupfregelung in einem Kraftfahrzeug und
Figur 2 den Reglerteil der Figur 1 im Schema.

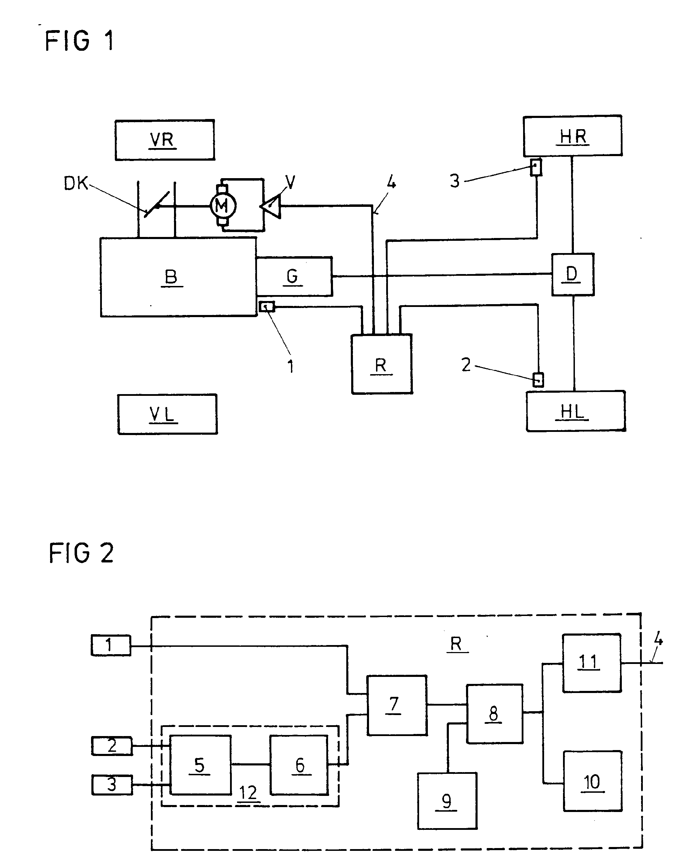

In Figur 1 weist das schematisch dargestellte Kraftfahrzeug eine Brennkraftmaschine (B) mit einem angeblockten Getriebe (G) auf, das sein Drehmoment über eine Kadanwelle auf ein Differenzial (D) überträgt. Das Differenzial (D) verteilt die Kraft, die von der Brennkraftmaschine (B) auf das Getriebe (G) übertragen wurde, auf die angetriebenen Hinterräder. Von den Hinterrädern bezeichnet (HR) das rechte angetriebene Hinterrad und (HL) das linke angetriebene Hinterrad. Das vordere rechte Rad (VR) und das vordere linke Rad (VL) sind in diesem Ausführungsbeispiel nicht angetrieben.

Zur Messung der Motordrehzahl bzw. der Drehzahl der Brennkraftmaschine ist ein Motordrehzahlfühler (1) vorgesehen. Zur Messung der Raddrehzahl des linken angetriebenen Hinterrades ist ein erster Raddrehzahlfühler (2) vorgesehen. Zur Messung der Raddrehzahl des rechten angetriebenen Hinterrades (HR) ist ein zweiter Raddrehzahlfühler (3) vorgesehen. Die Drehzahlsignale der drei genannten Drehzahlfühler werden einer Regel- oder Steuer- oder Anzeigeeinrichtung (R) zugeführt, die im vorliegenden Ausführungsbeispiel als Antriebsschlupfregeleinrichtung ausgebildet ist.

Aus diesem Grund weist die Regeleinrichtung (R) eine Ausgangsklemme (4) auf, über die einem Verstärker (V) elektrische Regelsignale zugeführt werden, die der Verstärker (V) in elektrische Steuerströme für einen Stellmotor (M) umwandelt, der seinerseits drehfest mit einer Drosselklappe (DK) als Leistungsstellglied der Brennkraftmaschine (B) verbunden ist.

Die allgemeine Antriebsschlupfregelungsfunktion der Antriebsschlupfregeleinrichtung (R) ist z. B. in der DE-OS 36 35 095 dargestellt und nicht unmittelbar Gegenstand der Erfindung. Die Grundfunktion besteht im wesentlichen darin, daß die Antriebsschlupfregeleinrichtung (R) über die Raddrehzahlen, die durch die Raddrehzahlfühler (2 und 3) gemessen werden, ein Durchdrehen der angetriebenen Hinterräder (HR, HL) erfaßt und aufgrund dieses Durchdrehens der angetriebenen Räder über die Ausgangsleitung (4) den Verstärker (V) derart ansteuert, daß der Stellmotor das Leistungsstellglied, Motordrosselklappe (DK) derart im Schließsinne verstellt, daß die Motorleistung vermindert wird und das durchdrehende Antriebsrad wieder auf dem Untergrund des Kraftfahrzeuges greifen kann.

In Figur 2 sind gleiche oder gleichwirkende Einrichtungsteile wie in der Figur 1 mit den gleichen Bezugszeichen dargestellt. Die Ausgangssignale der Raddrehzahlfühler (2, 3) werden parallel einem Mittelwertbildner (12) zugeleitet, der im Ausführungsbeispiel gem. der Figur 2 aus einem Summierer (5) und einem Teiler (6) besteht. Der Summierer (5) summiert die durch die Raddrehzahlfühler (2 und 3) gemessenen Raddrehzahlen der angetriebenen Hinterräder (HR und HL) auf. Nachdem diese Summation erfolgt ist, wird das Summationsergebnis durch den Teiler (6) durch die Zahl der angetriebenen Räder in diesem Ausführungsbeispiel 2 angetriebene Räder geteilt, so daß am Ausgang des Mittelwertbildners (12) der Mittelwert der gemessenen Raddrehzahl anliegt. Bei vierradgetriebenen Fahrzeugen würden entsprechend vier Raddrehzahlen aufsummiert, die durch den Teiler dann durch vier geteilt werden.

Das Ausgangssignal des Motordrehzahlfühlers (1), also die Motordrehzahl, wird in einem Quotientenbildner (7) durch den vorher beschriebenen Mittelwert geteilt. Der so ermittelte Quotient, der am Ausgang des Quotientenbildners (7) anliegt, wird in einem oder mehreren Vergleichern (8) mit den möglichen Übersetzungsverhältnissen der vorgesehenen Getriebegänge entsprechenden Werten verglichen, die in einem Speicher (9) abgelegt sind. Der im Vergleicher (8) ablaufende Vergleich des Quotienten mit den vorgegebenen Werten führt, aufgrund der starren Kopplung der Brennkraftmaschine mit dem Getriebe des Getriebes mit dem Differential und des Differentials mit den angetriebenen Hinterrädern (HR und HL) zu einem derartigen Vergleichsergebnis, daß der ermittelte Quotient mit genau einem der im Speicher abgelegten vorgegebenen Werte übereinstimmt. Dieser vorgegebene Wert entspricht aufgrund des starren Übersetzungsverhältnisses einem vorgegebenen Getriebegang, der z. B. in einer Ganganzeige (10) dem Bediener des Kraftfahrzeuges zur Anzeige gebracht werden kann.

Andererseits ist es möglich, die Ausgabe des Getriebegangs zur Steuerung und Regelung von Betriebskenngrößen des Kraftfahrzeuges bzw. der Brennkraftmaschine zu verwenden. Dies ist in der Figur 2 dadurch angedeutet, daß der Ausgang des Vergleichers (8) mit dem Antriebsschlupfregelteil (11) der Antriebsschlupfregeleinrichtung (R) verbunden ist, die die Ganginformation z. B. zur Ermittlung des Trägheitsmomentes des Antriebsstranges nutzt, wie dies vorher beschrieben wurde.

An der Ausgangsklemme (4) der Antriebsschlupfregeleinrichtung (R) liegt dann das Steuersignal für den Verstärker (V) in Figur 1 an.

Durch die Messung der Raddrehzahlen aller angetriebenen Räder und die anschließende Mittelwertbildung kann auch im Falle des Durchdrehens eines der angetriebenen Räder, wie dies beim Wirksamwerden der Antriebsschlupfregelung üblicherweise der Fall ist, sicher der eingelegte Getriebegang erkannt werden, ohne daß hierzu Schaltkontakte am Getriebeschalthebel erforderlich wären oder daß neben den für die Antriebsschlupfregelung selbst erforderlichen Drehzahlfühlern weitere Drehzahlfühler erforderlich sind.

## Patentansprüche

1. Verfahren zur Erfassung des bei einem Fahrzeug eingelegten Getriebeganges, bei dem die Motordrehzahl und eine weitere Bewegungsgröße bestimmt werden, bei dem der Quotient aus der Motordrehzahl und der Bewegungsgröße gebildet wird, bei dem der Quotient mit vorgegebenen, die möglichen Übersetzungsverhältnisse der Getriebegänge kennzeichnenden Werten verglichen wird und bei dem der Getriebegang ausgegeben wird, bei dem der Vergleich die Identität des Quotienten mit dem zugehörigen Wert ergibt, dadurch gekennzeichnet, daß die Bewegungsgröße bestimmt wird durch Messen der Raddrehzahlen aller angetriebenen Räder und durch Bildung des Mittelwertes der gemessenen Raddrehzahlen, daß der Quotient aus der Motordrehzahl und dem Mittelwert gebildet wird und daß der niedrigste Getriebegang ausgegeben wird, wenn die gemessene Raddrehzahl aller angetriebenen Räder den Wert 0 aufweist.

2. Verfahren nach Anspruch 1, dadurch gekennzeichnet, daß die möglichen Übersetzungsverhältnisse in etwa kennzeichnenden Wertebereiche gewählt werden und daß der Getriebegang ausgegeben wird, bei dem der Quotient innerhalb des vorgegebenen Wertebereichs liegt.

3. Verfahren nach Anspruch 1, dadurch gekennzeichnet, daß der zuletzt ausgegebene Getriebegang beibehalten wird, wenn der Vergleich des Quotienten mit den vorgegebenen, die möglichen Übersetzungsverhältnisse der Getriebegänge kennzeichnenden Werten keine Identität ergibt.

4. Einrichtung zur Erfassung des bei einem Fahrzeug eingelegten Getriebegangs mit einem Motordrehzahlfühler, mit einer Anordnung zur Ermittlung einer Bewegungsgröße, mit einem Quotientenbildner zur Bildung des Quotienten aus Motordrehzahl und Fahrzeuggeschwindigkeit, mit einem Speicher für die möglichen, die Übersetzungsverhältnisse der Getriebegänge kennzeichnenden Werte, mit einem Vergleicher zum Vergleich des Quotienten mit den Werten und mit Ausgabemitteln für den Getriebegang, bei dem der Vergleich die Identität des Quotienten mit dem zugehörigen Wert ergibt, dadurch gekennzeichnet, daß die Anordnung zur Ermittlung der Bewegungsgröße gebildet wird durch an allen angetriebenen Fahrzeugrädern (HR, HL) angeordnete (Raddrehzahlfühler (2,3) und durch einen Mittelwertbildner (12) für die gemessenen Raddrehzahlen, daß der Quotientenbildner (7) zur Bildung des Quotienten aus der Motordrehzahl und dem Mittelwert vorgesehen ist und daß die Ausgabemittel (4) den niedrigsten Getriebegang ausgeben, wenn die gemessene Raddrehzahl aller angetriebenen Räder den Wert 0 aufweist.

5. Einrichtung nach Anspruch 4, dadurch gekennzeichnet, daß der Mittelwertbildner (12) einen Summierer (5), der die gemessenen Raddrehzahlen summiert und einen Teiler (6), der die Summe durch die Zahl der angetriebenen Räder teilt, aufweist.

6. Einrichtung nach Anspruch 4, dadurch gekennzeichnet, daß der Speicher (9) für jedes mögliche Übersetzungsverhältnis zwei Werte aufweist, von denen ein Wert oberhalb und ein Wert unterhalb des Werts liegt, der dem exakten Übersetzungsverhältnis entspricht.

7. Verfahren nach Anspruch 1 oder Einrichtung nach Anspruch 4, gekennzeichnet durch die Verwendung in einer Antriebsschlupfregelung.

## Claims

1. Process for detecting the transmission gear selected on a vehicle, which involves determining the engine speed and one other motion variable, generating the quotient of the engine speed and the motion variable, comparing the quotient with preset values characterising the possible transmission ratios of the transmission gears and outputting the transmission gear in respect of which the comparison results in identity of the quotient with the associated value,
characterised in that the motion variable is determined by measuring the wheel speeds of all the driven wheels and by generating the mean value of the measured wheel speeds, in that the quotient of the engine speed and the mean value is generated and that the lowest gear is output if the measured wheel speed of all the driven wheels has the value zero.

2. Process according to claim 1, characterised in that values ranges are selected that approximately characterise the possible transmission ratios and that the gear is output in respect of which the quotient is within the preset range of values.

3. Process according to claim 1, characterised in that the gear last output is retained if the comparison of the quotient with the preset values characaterising the possible transmission ratios of the gears does not result in identity.

4. Device for detecting the transmission gear selected on a vehicle, comprising an engine speed sensor, an arrangement for ascertaining a motion variable, a quotient generator for generating the quotient of the engine speed and the speed of the vehicle, a memory for the possible values characterising the transmission ratios of the gears, a comparator for comparing the quotient with the values, and means for outputting the gear, wherein the comparison results in identity of the quotient with the associated value,
characterised in that the arrangement for ascertaining the motion variable is constituted by wheel speed sensors (2, 3) arranged on all the driven vehicle wheels (HR, HL) and by a mean-value generator (12) for the measured wheel speeds, in that the quotient generator (7) is provided to generate the quotient of the engine speed and the mean value, and in that the outputting means (4) output the lowest gear if the measured wheel speed of all the driven wheels has the value zero.

5. Device according to claim 4, characterised in that the mean-value generator (12) incorporates a summing unit (5) which totalises the measured wheel speeds, and a scaler (6) which divides the total by the number of driven wheels.

6. Device according to claim 4, characterised in that the memory (9) has two values for each possible transmission ratio, one value above and one value below the value corresponding to the exact transmission ratio.

7. Process according to claim 1 or device according to claim 4, characterised by use thereof in a traction control system.

## Revendications

1. Procédé de saisie du rapport de vitesse passé dans un véhicule, procédé dans lequel on détermine la vitesse de rotation du moteur et une autre grandeur du mouvement, dans lequel on forme le quotient de la vitesse de rotation du moteur de la grandeur du mouvement, dans lequel on compare le quotient avec des valeurs prescrites, caractérisant les rapports de réduction de la boîte de vitesses, et dans lequel le rapport de vitesse est fourni, procédé dans lequel la comparaison permet d'identifier le quotient avec la valeur correspondante, procédé caractérisé par le fait que la grandeur du mouvement est déterminée par mesure de la vitesse de rotation de toutes les roues motrices et par formation de la valeur moyenne des vitesses de rotation des roues ainsi mesurées, par le fait que le quotient est formé à partir de la vitesse de rotation du moteur et de cette valeur moyenne et par le fait que c'est le rapport de vitesse le plus bas qui est fourni lorsque la vitesse de rotation, mesurée, de toutes les roues motrices présente la valeur zéro.

2. Procédé selon la revendication 1, caractérisé par le fait que les rapports de réduction possibles sont choisis sur des plages de valeurs à peu près caractérisantes et qu'est fourni le rapport de vitesse pour lequel le quotient se situe à l'intérieur de la plage de valeurs prescrite.

3. Procédé selon la revendication 1, caractérisé par le fait que l'on conserve le rapport de vitesse fourni en dernier lieu lorsque la comparaison du quotient avec les valeurs prescrites, caractérisant les rapports de réduction possibles de la boîte de vitesses ne permet aucune identification.

4. Dispositif de saisie du rapport de vitesse passé dans un véhicule, comportant un capteur de vitesse de rotation du moteur, un organe pour déterminer une grandeur du mouvement, un organe de formation d'un quotient pour former le quotient de la vitesse de rotation du moteur par la vitesse du véhicule, comportant aussi une mémoire pour les valeurs caractérisant les rapports de réduction de la boîte de vitesses, comportant aussi un comparateur pour comparer le quotient avec les valeurs et comportant des moyens d'émission du rapport de vitesse, dispositif dans lequel la comparaison permet d'identifier le quotient avec la valeur correspondante, dispositif caractérisé par le fait que l'organe permettant de déterminer la grandeur du mouvement estformé par des capteurs (2,3) de vitesse de rotation des roues disposés sur toutes les roues motrices du véhicule (HR,HL) et par un organe (12) de formation de la valeur moyenne pour les vitesses mesurées de rotation des roues, par le fait que l'organe (7) de formation du quotient est prévu pour former le quotient à partir de la vitesse de rotation du moteur et de la valeur moyenne et par le fait que le moyen d'émission (7) fournit le rapport de vitesse le plus bas lorsque la vitesse mesurée de rotation de toutes les roues motrices présente la valeur 0.

5. Dispositif selon la revendication 4, caractérisé par le fait que l'organe (12) de formation de la valeur moyenne présente un additionneur (5), qui additionne les vitesses mesurées de rotation des roues, et un diviseur (6) qui divise la somme par le nombre des roues motrices.

6. Dispositif selon la revendication 4, caractérisé par le fait que la mémoire (9) présente, pour chaque rapport de réduction possible, deux valeurs dont une valeur se situe au-dessus, et une valeur, au-dessous, de la valeur qui correspond au rapport de réduction exact.

7. Procédé selon la revendication 1 ou dispositif selon la revendication 4, caractérisé par l'emploi dans une régulation d'antipatinage des roues.
